**Europäisches Patentamt**

**European Patent Office**

**Office européen des brevets**

(11) Numéro de publication: **0 234 157**
**B1**

(12) **FASCICULE DE BREVET EUROPEEN**

(45) Date de publication du fascicule du brevet:
**12.04.89**

(21) Numéro de dépôt: **86402922.8**

(22) Date de dépôt: **23.12.86**

(51) Int. Cl.⁴: **F16F 9/30**, F16F 9/12

(54) Amortisseur de rotation.

(30) Priorité: **30.12.85 FR 8519418**

(43) Date de publication de la demande:
**02.09.87 Bulletin 87/36**

(45) Mention de la délivrance du brevet:
**12.04.89 Bulletin 89/15**

(84) Etats contractants désignés:
**AT BE CH DE ES GB IT LI NL SE**

(56) Documents cités:
**FR-A- 2 256 347**
**US-A- 1 817 675**
**US-A- 3 107 752**

(73) Titulaire: **AEROSPATIALE SOCIETE NATIONALE INDUSTRIELLE Société Anonyme dite:, 37, Boulevard de Montmorency, F-75016 Paris(FR)**

(72) Inventeur: **Aubry, Jacques, 2, avenue Marie Gasquet Domaine du Lac Bleu, F-13480 Cabries(FR)**
Inventeur: **Deguise, Michel, 20 rue Joliot Curie, F-13370 Mallemort(FR)**

(74) Mandataire: **Bonnetat, Christian et al, Cabinet PROPI Conseils 23 rue de Léningrad, F-75008 Paris(FR)**

### Description

La présente invention concerne un amortisseur de rotation destiné à être installé entre une partie fixe et une partie mobile d'une mécanisme, ainsi qu'en particulier une suspension pour véhicule comportant au moins un amortisseur de ce type.

Les amortisseurs de rotation actuellement connus comportent un stator et un rotor définissant entre eux une chambre remplie d'un fluide, des palettes au moins sensiblement radiales étant agencées sur chacun desdits stator et rotor, les palettes agencées sur le stator, respectivement le rotor, divisant ladite chambre en une pluralité de volumes, et les extrémités libres des palettes agencées sur le rotor, respectivement le stator, définissant des passages de laminage en coopération avec des portions cylindriques, en regard, de la surface comprise entre deux palettes du stator, respectivement du rotor.

De tels amortisseurs connus donnent des résultats satisfaisants et sont utilisés, par exemple, dans les suspensions de véhicules lourds, les commandes de direction de véhicules, les machines-outils à inversion de sens de rotation, etc...

Dans le cas d'une suspension, le rotor est lié à la roue du véhicule par l'intermédiaire d'un bras de la suspension, et le stator est solidaire du châssis du véhicule. Lors du passage de la roue sur un obstacle, le bras de la suspension transmet le déplacement de la roue au rotor, ce qui entraîne la rotation des palettes associées et le transfert du fluide visqueux à travers les volumes par l'intermédiaire des passages de laminage qui assurent ainsi l'amortissement.

Cependant, lors du fonctionnement répété de ces amortisseurs, le volume total du fluide visqueux varie en fonction de la température. Lorsque celle-ci s'accroît, le fluide se dilate et occupe un volume plus important. En revanche, lorsque la température décroît, le fluide devient plus compact en occupant un volume moindre.

En conséquence, la chambre interne de ces amortisseurs risque de ne pas être remplie par une quantité optimale de fluide, ce qui provoque ainsi une perte d'efficacité de ces amortisseurs et des à-coups de fonctionnement dûs notamment à la présence d'air dans la chambre. Pour tenter de remédier à cet inconvénient, on a proposé, par exemple dans le document FR-A 2 256 347, un amortisseur de rotation comportant une chambre auxiliaire en communication avec la chambre interne principale au moyen d'orifices pratiqués dans l'un des couvercles de l'amortisseur. Cette chambre auxiliaire est délimitée par le prolongement d'un carter du stator, le couvercle et un piston apte à coulisser dans le carter.

Ainsi, lorsque le volume du fluide augmente de façon importante, il passe de la chambre principale à la chambre auxiliaire à travers lesdits orifices et déplace le piston d'une quantité suffisante pour compenser la variation de volume du fluide. Lorsque la température du fluide diminue, entraînant une diminution de volume, le piston refoule le fluide de la chambre auxiliaire vers la chambre principale sous l'action de moyens élastiques. La pression de refoulement du piston doit toujours être supérieure à la pression de fonctionnement de l'amortisseur. Cet amortisseur donne de bons résultats, mais est de réalisation complexe et coûteuse, à cause de la conception d'un carter adapté à recevoir un piston muni de joints d'étanchéité dynamiques et équipé de moyens élastiques de rappel. De plus, l'utilisation de tels joints nécessite des opérations d'entretien pour contrôler le bon fonctionnement de l'ensemble.

Le déplacement du piston n'est pas, de plus, immédiat puisque la pression exercée par le fluide doit vaincre les forces de frottement créées entre les joints et leurs surfaces de contact respectives.

La présente invention a pour but de proposer un amortisseur de rotation palliant les inconvénients mentionnés ci-dessus, de conception simple et comportant une chambre auxiliaire sans joint d'étanchéité dynamique, ce qui supprime ainsi tout entretien.

A cet effet, selon l'invention, l'amortisseur de rotation, du type comportant un stator et un rotor définissant entre eux une chambre principale remplie d'un fluide, des palettes au moins sensiblement radiales étant agencées sur chacun desdits stator et rotor, les palettes agencées sur le stator, respectivement le rotor, divisant ladite chambre principale en une pluralité de volumes, et les extrémités libres des palettes agencées sur le rotor, respectivement le stator, définissant des passages de laminage en coopération avec des portions, en regard, de la surface comprise entre deux palettes du stator, respectivement du rotor, ledit amortisseur comportant de plus une chambre auxiliaire en communication avec ladite chambre principale, est remarquable en ce que ladite chambre auxiliaire est formée par au moins une enceinte délimitée entre, d'une part, une face d'extrémité dudit amortisseur et, d'autre part, une membrane élastiquement déformable associée à ladite face d'extrémité.

De préférence, ladite chambre auxiliaire est formée par deux enceintes dont chacune d'elles est délimitée entre d'une part, l'une desdits faces d'extrémité dudit amortisseur et, d'autre part, une membrane élastiquement déformable associée à la face d'extrémité correspondante. Avantageusement, une face d'extrémité associée à une membrane est constituée de deux couronnes respectivement associées audit stator et audit rotor, ledit passage de communication entre la chambre principale et la chambre auxiliaire étant formé par un jeu ménagé entre lesdits couronnes.

Ladite membrane d'une chambre auxiliaire peut avoir une forme annulaire.

De plus, il est avantageux que les périphéries annulaires interne et externe d'une membrane soient entourées d'une bague intérieure et d'une bague extérieure. Ladite membrane peut être solidarisée par vulcanisation sur ses bagues intérieure et extérieure respectives, tandis que ladite membrane entourée desdites bagues intérieure et extérieure est logée dans une gorge annulaire correspondante définie par lesdites couronnes.

Par ailleurs, la présente invention permet de remédier à l'inconvénient des amortisseurs connus résidant en ce que le laminage demeure constant quelle que soit l'étendue de la rotation relative entre les rotor et stator, c'est-à-dire, par exemple dans le cas d'application à une suspension, quelle que soit la charge du véhicule.

A cette fin, l'amortisseur de rotation selon l'invention est remarquable en ce que l'aire de la section transversale de chaque passage de laminage est variable en fonction de la rotation relative entre le rotor et le stator. Par exemple, cette aire est d'autant plus petite que la rotation relative entre lesdits rotor et stator, dans le sens de l'amortissement, est plus grande.

Ainsi, dans ce dernier mode de réalisation, plus la rotation relative entre le rotor et le stator est importante, plus le freinage du fluide, et par conséquent le freinage de celui-ci, est important.

Bien que d'autres possibilités soient envisageables, il est particulièrement avantageux, selon l'invention, que la distance entre les extrémités libres des palettes agencées sur le rotor, et sur le stator respectivement, et les portions, en regard, de la surface comprise entre deux palettes du stator, et du rotor respectivement, soit d'autant plus petite ou plus grande que la rotation relative entre lesdits rotor et stator, dans le sens de l'amortissement, est plus grande.

Une façon particulièrement simple d'obtenir cette variation de distance, lorsque le stator et le rotor sont coaxiaux, consiste en ce qu'au moins une partie de chaque portion de ladite surface est cylindrique et excentrée par rapport à l'axe commun auxdits rotor et stator.

En particulier, les centres de courbure des sections desdites portions cylindriques de ladite surface par un plan transversal auxdites portions de surface sont situés sur un cercle, dont le centre appartient à l'axe commun auxdits rotor et stator, en étant régulièrement espacés sur ce cercle.

Dans un exemple particulier de réalisation dans lequel quatre palettes sont agencées sur le rotor et quatre palettes sont agencées sur le stator, lesdits centres de courbure sont disposés en quadrature.

Quand, plus particulièrement, le stator est disposé à l'intérieur du rotor et chaque passage de laminage est défini entre l'extrémité libre d'une palette agencée sur le stator et une portion cylindrique, en regard, de la surface comprise entre deux palettes du rotor, alors, selon l'invention, le centre de courbure de la section de chaque portion cylindrique par un plan transversal à ladite portion est situé sur la ligne joignant les extrémités des palettes du stator qui sont chacune adjacentes à la palette du stator dont l'extrémité libre définit, avec ladite portion cylindrique, un passage de laminage.

Les applications de l'amortisseur selon l'invention sont variées et deux exemples particuliers adaptés respectivement aux suspensions de véhicules et aux commandes de vol pour aéronef seront décrits ci-après.

Les figures du dessin annexé feront bien comprendre comment l'invention peut être réalisée. Sur ces figures, des références identiques désignent des éléments semblables.

La figure 1 est une vue en coupe axiale d'un exemple de réalisation de l'amortisseur selon l'invention.

La figure 2 est une vue en coupe selon la ligne II–II de la figure 1.

La figure 3 est une vue partielle agrandie de la figure 1.

La figure 4 illustre schématiquement une application de l'amortisseur des figures 1 à 3 à une suspension de véhicule.

Les figures 5 et 6 montrent schématiquement une autre réalisation de l'amortisseur selon l'invention, appliquée à une commande de vol d'aéronef.

Les figures 7 et 8 illustrent une variante de réalisation de l'amortisseur des figures 1 à 3.

La figure 9 illustre l'application de l'amortisseur des figures 7 et 8 à la suspension de la figure 4.

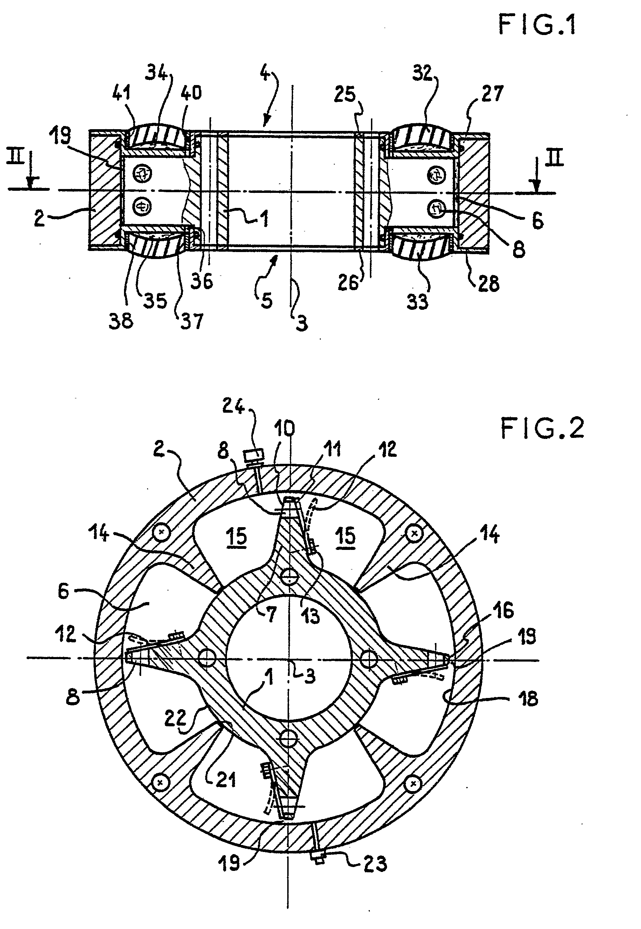

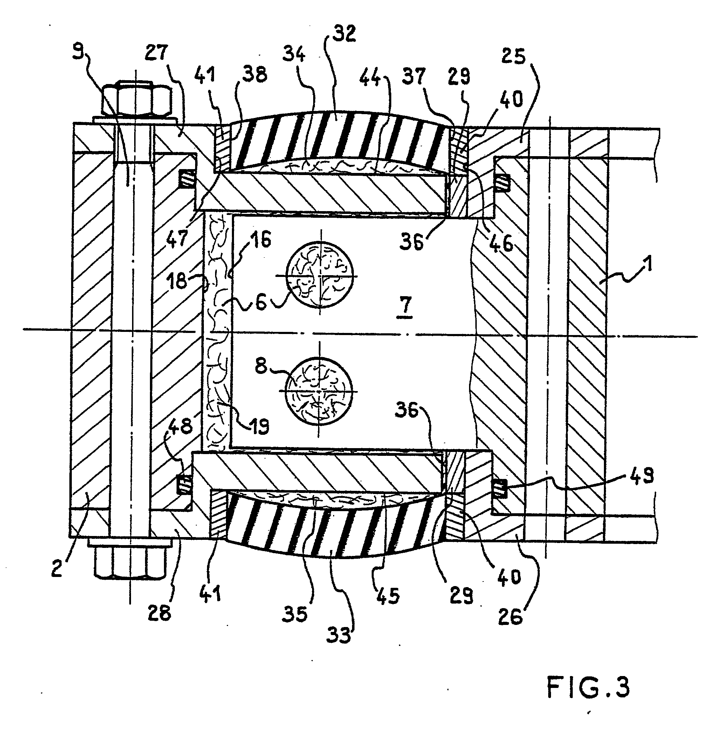

L'amortisseur de rotation montré sur les figures 1 à 3 comporte un stator 1 de forme extérieure cylindrique circulaire et un rotor 2 de forme intérieure cylindrique circulaire, montés coaxialement autour d'un axe de rotation 3, fermés de part et d'autre par deux faces extrêmes 4 et 5 disposées transversalement à l'axe 3, et assemblées au moyen de boulons 9 (représentés sur la figure 3) traversant le stator et le rotor.

Une chambre principale 6 est ainsi définie entre les deux faces 4 et 5, le stator et rotor; cette chambre 6 est remplie d'un fluide à haute viscosité, par exemple d'huile de silicone.

Le stator 1 comprend une pluralité de palettes radiales 7 régulièrement réparties autour de l'axe de rotation 3 et percées d'orifices 8 mettant en communication les deux côtés 10 et 11 de chaque palette 7. Des moyens de transfert unidirectionnel du fluide sont ménagés sur le côté 11 de chaque palette et sont constitués par une lame élastique 12 fixée par une vis 13 sur ces palettes 7.

De même, le rotor 2 comprend également une pluralité de palettes radiales 14 régulièrement réparties autour de l'axe 3. Dans l'exemple illustré, le stator et le rotor comportent, chacun, quatre palettes agencées respectivement à 90° l'une de l'autre. En position statique de l'amortisseur, chaque palette 14 du rotor se trouve dans une position médiane entre deux palettes adjacentes 7 du stator.

La chambre principale 6 se trouve ainsi divisée en une pluralité de volumes 15 (en l'occurrence huit), remplis de fluide.

Un passage de laminage 19 du fluide est prévu entre l'extrémité 16 de chaque palette 7 du stator et la paroi interne cylindrique circulaire 18 du rotor 2. Ces passages internes calibrés 19 permettent l'écoulement laminaire du fluide dans les deux sens de rotation à travers les différents volumes 15. Par contre, l'extrémité 21 des palettes 14 du rotor est sensiblement en contact de frottement doux avec la paroi cylindrique circulaire formant l'arbre 22 du stator limitant le passage du fluide à une très faible valeur.

En outre, le rotor est équipé dans ce mode de réalisation, d'une valve de remplissage 23 en fluide visqueux de la chambre principale 6 et d'une valve de purge 24 diamètralement opposées.

Avantageusement, les faces extrêmes 4 et 5 sont constituées chacune d'une première couronne, respectivement 25, 26, fixée par les boulons 9 au stator 1 et d'une seconde couronne, respectivement 27, 28, fixée par les boulons 9 au rotor 2.

Un palier autolubrifié 29 est disposé entre la première couronne et la seconde couronne de chaque face. Une membrane 32, 33 déformable élastiquement est agencée sur chaque face extrême. De façon plus précise, les membranes 32, 33 ont une forme annulaire de section sensiblement rectangulaire. Elles sont réalisées en élastomère ou bien en une succession de différentes couches métalliques et couches d'élastomère disposées alternativement. D'autres formes et réalisations pourraient également convenir.

La forme annulaire de ces membranes détermine deux périphéries, l'une interne 37 et l'autre externe 38, qui sont respectivement entourées par une bague intérieure 40 et une bague extérieure 41 sur lesquelles elles sont adhérisées.

Ainsi, chaque membrane 32, 33, entourée de ses bagues 40, 41, est logée dans une gorge annulaire 44, 45 correspondante, définie par les deux couronnes 25, 27 et 26, 28 de chaque face. Avantageusement, les bagues intérieure 40 et extérieure 41 de chacune des membranes sont collées sur les parois latérales 46, 47 des gorges 44, 45.

Les volumes délimités respectivement entre chaque membrane 32, 33 et chaque gorge 44, 45 définissent deux chambres auxiliaires 34, 35 en communication avec la chambre principale 6 par un jeu fonctionnel 36 prévu entre les deux couronnes 25 et 27, d'une part, et 26 et 28, d'autre part, formant respectivement les gorges 44 et 45 de chaque face extrême, plus précisément de chaque côté du palier 29 séparant les deux couronnes. (Le jeu 36 est représenté agrandi sur la figure 3). La valeur de ce jeu est déterminée pour faire office de filtre dynamique à la fréquence de fonctionnement de l'amortisseur, afin de s'affranchir d'un effort de rappel des membranes supérieur à la pression de fonctionnement de l'amortisseur.

On voit ainsi que, selon l'invention, ces chambres auxiliaires 34, 35 permettent de compenser les variations de volume du fluide visqueux en fonction de sa température de fonctionnement grâce aux membranes 32, 33 élastiquement déformables. Ces membranes, solidarisées respectivement au stator et au rotor par l'intermédiaire des bagues intérieures et extérieures, travaillent, lors du mouvement du rotor par rapport au stator, en torsion. La nature du matériau de ces membranes permet le débattement angulaire des palettes du rotor vis-à-vis des palettes du stator, sans détérioration de ces membranes.

Avantageusement, les couches constituant les membranes sont disposées parallèlement par rapport à l'axe de rotation de l'amortisseur de façon qu'elles suivent progressivement les déformations dues à la torsion.

De plus, de par cette conception, l'amortisseur est totalement étanche, puisque le collage des membranes sur les couronnes de chaque face assure l'étanchéité des chambres auxiliaires 34, 35, et deux joints toriques 48, 49 disposés respectivement sur chaque face, dans une gorge ménagée dans le rotor 2 en regard du second disque et dans une gorge ménagée dans le stator en regard du premier disque, assurent l'étanchéité de la chambre principale 6.

L'amortisseur décrit ci-dessus est particulièrement avantageux par rapport à ceux de l'art antérieur puisque aucun joint dynamique n'est utilisé, ce qui permet d'éviter toute fuite par usure de ce dernier en service.

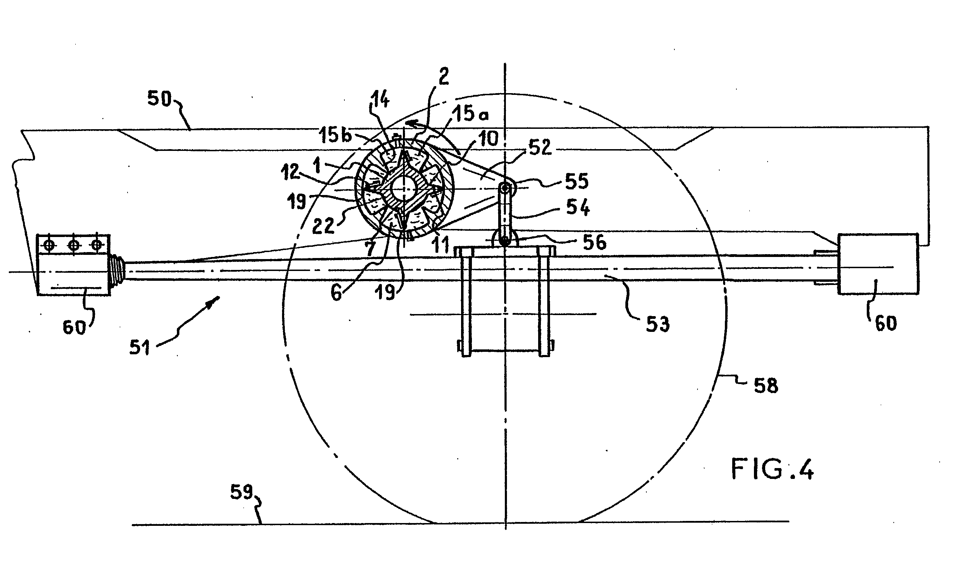

Le fonctionnement de l'amortisseur selon l'invention sera décrit ci-après, notamment en regard de la figure 4 illustrant schématiquement une application de celui-ci à la suspension d'un véhicule, tel qu'un tracteur routier.

Au préalable, le fluide introduit dans l'amortisseur, du type huile de silicone pour ses caractéristiques visqueuses, est injecté à une pression suffisante pour que la déformation élastique des membranes 32, 33 couvre la rétraction volumique du fluide, lors de l'utilisation à basse température. En conséquence, les membranes des chambres auxiliaires de l'amortisseur sont gonflées.

La figure 4 illustre l'amortisseur monté au moyen de l'arbre 22 du stator 1 sur le châssis 50 du tracteur routier 51 et au moyen d'une partie excentrée 52 du rotor 2 sur un élément ou bras 53 de suspension par l'intermédiaire d'une bielle rigide 54. Plus précisément, les deux extrémités de la bielle 54 sont articulées respectivement autour d'un axe 55 sur la partie excentrée 52 et autour d'un axe 56 sur l'élément 53 de suspension, qui porte une ou plusieurs roues 58 en contact avec le sol 59. Les extrémités de l'élément 53 sont maintenues dans deux paliers 60 solidaires du châssis.

Lorsque la roue 58 rencontre un obstacle, par exemple une bosse, le déplacement de la roue entraîne celui de l'élément de suspension 53 et de la bielle 54 par la liaison axiale 56, ce qui provoque, par la liaison axiale 55, la rotation du rotor 2 autour de l'axe 3 dans le sens senestrorsum indiqué par la flèche.

Le fluide visqueux est alors transféré d'un volume à l'autre, plus précisément d'un volume 15a délimité par les palettes 14 du rotor et les côtés 11 des palettes 7 du stator vers un volume 15b délimité entre les côtés 10 des palettes 7 du stator et les palettes 14 du rotor. Le transfert du fluide s'effectue au travers des passages calibrés de laminage 19, qui assurent un laminage important du fluide et par conséquent un freinage de celui-ci entre les divers volumes 15a, 15b, absorbant l'énergie produite par le choc dans le sens détente.

Lorsque la roue a franchi l'obstacle, dans le sens compression, le rotor 2 se déplace alors dans le sens dextrorsum et le transfert du fluide s'effectue principalement par les trous de communication 8 entre les volumes 15b et 15a, les lames élastiques 12 (comme celles représentées en traits interrompus sur la figure 2) s'ouvrant sous l'action du fluide. Le débit du fluide, auquel s'ajoute celui passant par les passages laminaires 19, est alors important, ce qui permet un déplacement de la roue pour absorber le choc.

Le passage successif des roues du tracteur routier sur des obstacles dus à des terrains accidentés entraîne un échauffement du fluide contenu dans les amortisseurs. Ce fluide se dilate et occupe alors un volume plus important. Les chambres auxiliaires 34, 35 en communication avec la chambre principale 6 au moyen du jeu fonctionnel 36, jouent alors leur rôle. L'augmentation de volume du fluide est compensée par la déformation élastique des membranes 32, 33 des chambres auxiliaires 34, 35.

Ces membranes, travaillant en torsion, ne subissent que la pression statique du fluide, la pression dynamique, lors du mouvement de l'amortisseur étant filtrée à travers le jeu fonctionnel 36.

De plus, les membranes participent au retour en position d'équilibre des pressions dans l'amortisseur, en revenant dans leur état initial. Ces membranes peuvent également être utilisées, si nécessaire, pour apporter sur l'arbre rotatif un rappel élastique en torsion en parallèle avec la fonction ·d'amortissement du mouvement rotatif.

De même, lors de la rétraction de volume du fluide contenu dans l'amortisseur, celui-ci étant chargé préalablement pour compenser la rétraction volumique du fluide, la réserve de fluide ainsi emmagasinée dans les deux chambres auxiliaires permet, lors de la rétraction de volume du fluide dans la chambre principale, d'injecter à travers le jeu 36, du fluide dans la chambre principale en le maintenant constamment remplie de fluide.

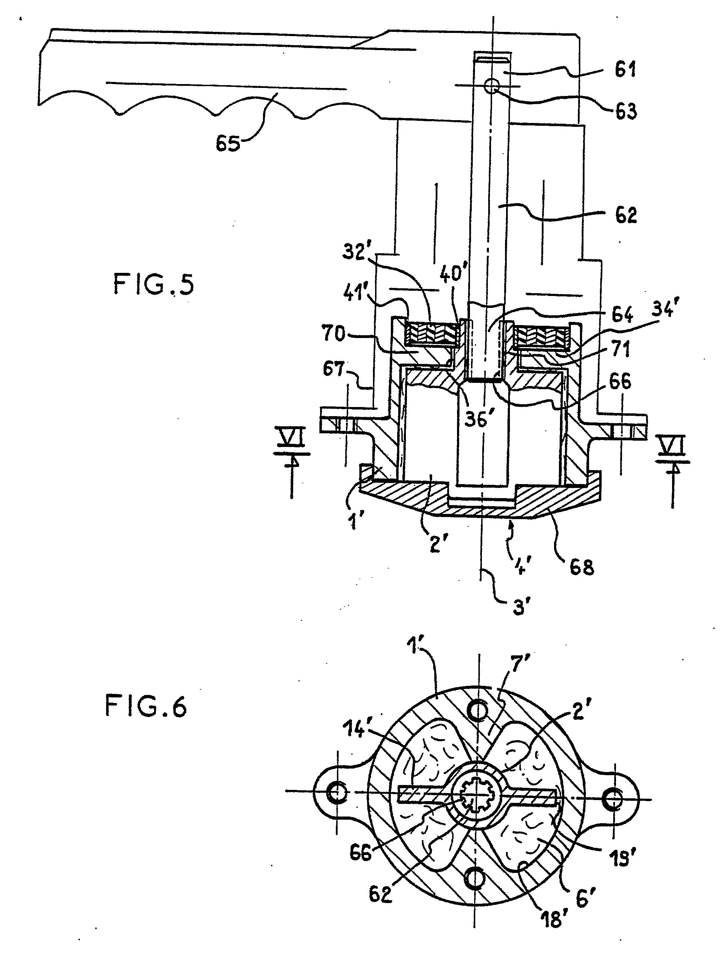

Un autre exemple d'application de l'invention est illustré sur les figures 5, 6, qui représentent plus particulièrement une commande de vol pour aéronef destinée, par exemple, à l'orientation par un vérin électrique du diabolo avant du train d'atterrissage tricycle d'un hélicoptère.

La commande elle-même est constituée d'une poignée 65 solidaire d'une première extrémité 61 d'un arbre 62 au moyen d'une goupille 63. L'arbre 62 est solidaire, par un dispositif non représenté, d'un potentiomètre de la commande de braquage par un moteur électrique du diabolo avant du train d'atterrissage de l'hélicoptère, afin de pouvoir diriger celui-ci lors de son roulage au sol. La seconde extrémité 64 reçoit l'amortisseur selon l'invention représenté en trait épais. Le mode de réalisation de celui-ci diffère du précédent, mais ne sort pas du cadre de l'invention. En effet, le rotor enveloppant le stator dans l'application précédente, est disposée à l'intérieur du stator. Le rotor 2 est agencé autour de la seconde extrémité de l'arbre 62 par des cannelures 66 et le stator 1', coaxial au rotor, est fixé sur un support 67 de la commande de vol. Le rotor 2' comporte deux palettes 14' aptes à pivoter autour de l'axe 3' de l'arbre 62 sous l'action d'un déplacement de la poignée 65 par le pilote. Le stator 1' enveloppe le rotor 2' et comporte également deux palettes 7' et un passage calibré laminaire 19' est prévu entre les extrémités des palettes 14' du rotor et l'alésage interne 18' du stator pour assurer le laminage du fluide contenu dans la chambre principale 6'. Une face extrême 4' est définie par un bouchon 68 se fixant avec étanchéité à l'aide d'un joint plat sur le stator. La seconde face extrême 5' est, quant à elle, définie par un épaulement 70 du stator enveloppant la partie 71 du rotor montée sur les cannelures 66. Un jeu 36' est ainsi créé entre l'épaulement 70 et la partie 71 du rotor, mettant en communication la chambre principale 6' avec la chambre auxiliaire 34'. La membrane déformable élastiquement 32' est cerclée par deux bagues intérieure 40' et extérieure 41' collées comme dans la réalisation décrite en regard des figures 1 à 3, sur le stator et le rotor assurant l'étanchéité totale, sans joint dynamique, de la chambre 34'. Avantageusement, les diverses couches de la membrane (couches d'élastomère et couches métalliques) sont disposées alternativement les unes par rapport aux autres et sont agencées parallèlement à l'axe de rotation 3'. En modulant le nombre de couches ainsi que leurs natures, on peut obtenir différentes raideurs angulaires en torsion de l'amortisseur.

Le remplissage en fluide de ce modèle est réalisé par fermeture du bouchon 68 lorsque l'amortisseur est placé en immersion totale dans un bain de fluide. Le fonctionnement est identique à celui précédemment décrit et cet amortisseur a notamment pour but, par l'intermédiaire du laminage du fluide visqueux à travers les différents volumes de la chambre principale, de limiter la vitesse de braquage de la commande par le pilote et de réduire, ainsi, les risques de capotage latéral de l'hélicoptère, lors du roulage au sol de celui-ci.

La chambre auxiliaire 34' permet de compenser les dilatations thermiques du fluide de la chambre principale dues essentiellement aux variations brutales de températures extérieures auxquelles est soumis l'aéronef.

La réalisation de cet amortisseur pourrait être différente par exemple en ce qui concerne le nombre et le profil des palettes et les moyens de laminage sans sortir pour cela du cadre de l'invention.

Les avantages procurés par un tel amortisseur sont déterminants par rapport à ceux de l'art antérieur.

L'amortisseur est totalement étanche puisqu'aucun joint dynamique n'est utilisé, il compense les dilatations thermiques du volume du fluide visqueux par la déformation axiale de la membrane élastique, et la raideur angulaire en torsion de l'amortisseur est modulable en fonction de son utilisation.

De plus, l'amortisseur est très simple et très économique à construire et son entretien en service ne nécessite pratiquement aucune intervention.

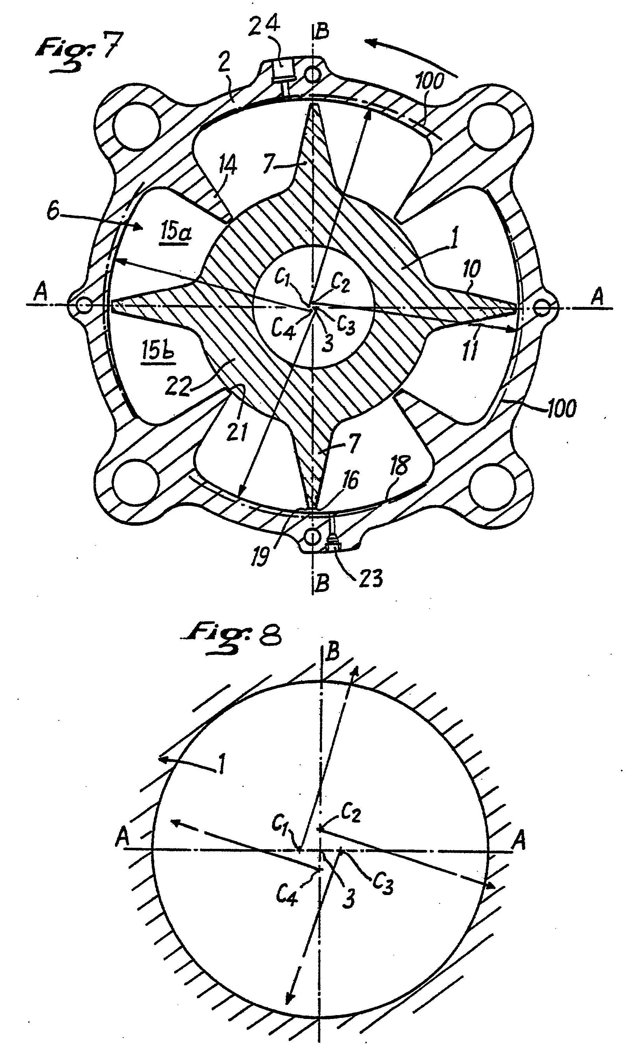

L'amortisseur de rotation montré sur la figure 7 comporte un stator 1 de forme extérieure cylindrique circulaire et un rotor 2 montés coaxialement autour d'un axe de rotation 3 (le stator 1 étant à l'intérieur du rotor 2), et fermés transversalement à l'axe 3.

Une chambre 6 est ainsi définie entre lesdits stator 1 et rotor 2, cette chambre 6 étant remplie d'un fluide de viscosité élevée, par exemple de l'huile de silicone.

Le stator 1 comprend une pluralité de palettes radiales 7 qui sont régulièrement réparties autour de l'axe de rotation 3 et qui ont chacune deux côtés 10 et 11.

De même, le rotor 2 comprend une pluralité de palettes radiales 14 régulièrement réparties autour de l'axe 3. Dans l'exemple représenté, le stator 1 et le rotor 2 comportent, chacun, quatre palettes disposées respectivement à 90° l'une de l'autre. En position statique de l'amortisseur, chaque palette 14 du rotor 2 se trouve dans une position médiane entre deux palettes adjacentes 7 du stator 1, ou, en d'autres termes, chaque palette 7 du stator se trouve dans une position médiane entre deux palettes adjacentes 14 du rotor 2.

La chambre principale 6 se trouve ainsi divisée en une pluralité de volumes 15a, 15b (en l'occurrence huit), remplis de fluide.

L'extrémité 21 de chaque palette 14 du rotor 2 est sensiblement en contact de frottement doux avec la paroi cylindrique circulaire formant l'arbre 22 du stator 1 en limitant ainsi le passage du fluide, dans cette zone, à une très faible valeur.

En revanche, un passage de laminage 19 est prévu entre l'extrémité libre 16 de chaque palette 7 du stator 1 et la portion cylindrique, en regard, de la surface 18 comprise entre deux palettes 14 de rotor 2. Ces passages de laminage 19 permettent l'écoulement laminaire du fluide, dans les deux sens de rotation, à travers les différents volumes 15a, 15b.

Selon l'invention, l'aire de la section transversale de chaque passage de laminage 19 et, en particulier, dans cet exemple de réalisation, la distance entre les extrémités libres 16 des palettes 7 du stator 1 et les portions cylindriques, en regard, de la surface 18 comprise entre deux palettes 14 du rotor 2, sont d'autant plus petites que la rotation relative entre le rotor 2 et le stator 1, dans le sens de l'amortissement, est plus grande.

Pour cela, au moins une partie de chaque portion cylindrique de la surface 18 est excentrée par rapport à l'axe commun 3 au rotor 2 et au stator 1 ( sur la figure 7, on a représenté, en traits mixtes, la section 100, par le plan de coupe, des surfaces 18, telle qu'elle apparaîtrait si celle-ci était centrée en 3).

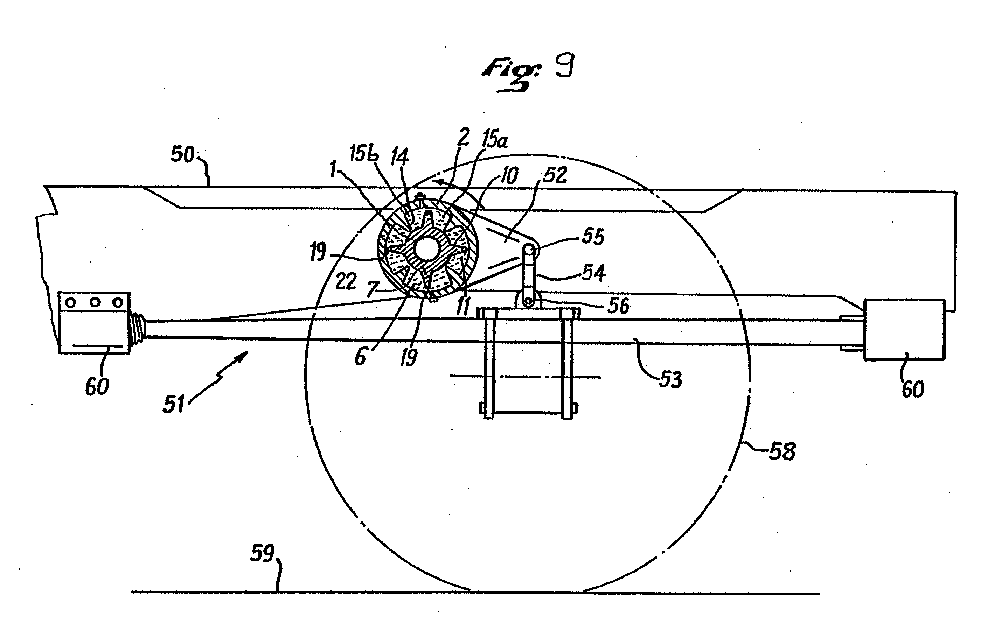

En se référant plus particulièrement à la figure 8, les centres de courbure C1, C2, C3 et C4 des sections des portions cylindriques de la surface 18 par un plan transversal auxdites portions de surface (en fait le plan de coupe de la figure 7) sont disposés en quadrature de façon telle que chaque centre C1, C2, C3 ou C4 soit situé sur la ligne A–A, B–B joignant les extrémités des palettes 7 du stator 1 qui sont chacune adjacentes à la palette 7 du stator 1 dont l'extrémité libre définit, avec la portion cylindrique considérée, un passage de laminage.

En outre, le rotor 2 présente une vanne de remplissage 23 de la chambre 6 en fluide visqueux et une vanne de purge 24 disposées, l'une par rapport à l'autre, de façon diamétralement opposée.

Le fonctionnement de l'amortisseur selon l'invention sera décrit ci-après, en référence à la figure 9 illustrant schématiquement une application de celui-ci à la suspension d'un véhicule, tel qu'un tracteur routier.

Sur la figure 9, l'amortisseur est monté par l'intermédiaire de l'arbre 22 du stator 1 sur le châssis 50 d'un tracteur routier 51 et par l'intermédiaire d'une partie excentrée 52 du rotor 2 sur un bras de suspension 53 à l'aide d'une bielle rigide 54. Plus précisément, les deux extrémités de la bielle 54 sont articulées, respectivement, autour d'un axe 55 sur la partie excentrée 52 et autour d'un axe 56 sur le bras élastique de suspension 53 portant une ou plusieurs roues 58 en contact avec le sol 59. Les extrémités du bras 53 sont logées dans deux paliers 60 solidaires du châssis.

Lorsque la roue 58 rencontre un obstacle, par exemple une bosse, le déplacement de la roue entraîne celui du bras de suspension 53 et de la bielle 54 par la liaison axiale 56, ce qui provoque, par la liaison axiale 55, la rotation du rotor 2 autour de l'axe 3 dans le sens senestrorsum indiqué par la flèche sur la figure 9.

Le fluide visqueux est alors transféré de chaque volume 15a délimité par une palette 14 du rotor 2 et le côté 11 de la palette 7 correspondante du stator 1, vers le volume 15b délimité par le côté 10 de la palette 7 du stator 1 et la palette 14 du rotor 2 voisine de ce côté 10 de palette. Le transfert du fluide s'effectue à travers chaque passage de laminage 19, assurant le freinage du fluide entre les différents volumes 15a, 15b en absorbant l'énergie produite par le choc.

Comme l'aire de la section transversale de chaque passage de laminage 19 décroît au fur et à mesure de la rotation du rotor 2, le laminage du fluide visqueux, et donc le freinage de celui-ci, devient plus important lorsque la rotation, dans le sens de l'amortissement, du rotor 2 est plus grande.

Lorsque la roue a franchi l'obstacle, le rotor 2 se déplace alors dans le sens dextrorsum et le transfert de fluide s'effectue du volume 15b vers le volume 15a avec une section de passage de laminage 19 qui s'accroît avec le déplacement angulaire, donc provoquant un amortissement décroissant avec la course. On pourrait également obtenir l'effet inverse, c'est-à-dire un amortissement plus grand à la détente de la suspension, par exemple en disposant les portions cylindriques des surfaces 18 comprises entre deux palettes du rotor 2, de telle sorte que chaque passage de laminage 19 augmente lorsque le rotor tourne dans le sens senestrorsum.

**Revendications**

1. Amortisseur de rotation, du type comportant un stator (1) et un rotor (2) définissant entre eux une chambre principale (6) remplie d'un fluide, des palettes (7, 14) au moins sensiblement radiales étant agencées sur chacun desdits stator et rotor, les palettes agencées sur le stator, respectivement le rotor, divisant ladite chambre principale en une pluralité de volumes (15), et les extrémités libres (16) des palettes agencées sur le rotor, respectivement le stator, définissant des passages de laminage (19) en coopération avec des portions, en regard, de la surface comprise entre deux palettes du stator, respectivement du rotor, ledit amortisseur comportant de plus une chambre auxiliaire (34, 35) en communication avec ladite chambre principale, caractérisé en ce que ladite chambre auxiliaire (34, 35) est formée par au moins une enceinte délimitée entre, d'une part, une face d'extrémité (4, 5) dudit amortisseur et, d'autre part, une membrane (32, 33) élastiquement déformable associée à ladite face d'extrémité.

2. Amortisseur selon la revendication 1, caractérisé en ce que ladite chambre auxiliaire (34, 35) est formée par deux enceintes dont chacune d'elles est délimitée entre d'une part, l'une desdites faces d'extrémité (4, 5) dudit amortisseur et, d'autre part, une membrane (32, 33) élastiquement déformable associée à la face d'extrêmité correspondante.

3 . Amortisseur selon la revendication 1, caractérisé en ce qu'une face d'extrêmité (4, 5) associée à une membrane (32, 33) est constituée de deux couronnes (25, 26, 27, 28) respectivement associées audit stator (1) et audit rotor (2), ledit passage de communication entre la chambre principale (6) et la chambre auxiliaire (34, 35) étant formé par un jeu (36) ménagé entre lesdites couronnes.

4. Amortisseur selon l'une des revendications 1 à 3, caractérisé en ce que ladite membrane (32, 33) d'une chambre auxiliaire (34, 35) a une forme annulaire.

5. Amortisseur selon l'une des revendications 1 à 4, caractérisé en ce que les périphéries annulaires interne (37) et externe (38) d'une membrane (32, 33) sont entourées d'une bague intérieure (40) et d'une bague extérieure (41).

6. Amortisseur selon la revendication 5, caractérisé en ce que ladite membrane (32, 33) est solidarisée par vulcanisation sur ses bagues intérieure (40) et extérieure (41) respectives.

7. Amortisseur selon l'une des revendications 3 à 6, caractérisé en ce que ladite membrane (32, 33) entourée desdites bagues intérieure et extérieure est logée dans une gorge annulaire (44, 45) correspondante définie par lesdites couronnes.

8. Amortisseur de rotation selon la revendication 1, caractérisé en ce que l'aire de la section transversale de chaque passage de laminage (19) est variable en fonction de la rotation relative entre ledit rotor (2) et ledit stator (1).

9. Amortisseur selon la revendication 8, caractérisé en ce que la distance entre les extrémités libres (16) des palettes (7) agencées sur le rotor, et sur le stator respectivement, et les portions, en regard, de la surface (18) comprise entre deux palettes (14) du stator, et du rotor respectivement, est d'autant plus petite que la rotation relative entre lesdits rotor et stator, dans le sens de l'amortissement, est plus grande.

10. Amortisseur selon la revendication 8, caractérisé en ce que la distance entre les extrémités libres (16) des palettes (7) agencées sur le rotor, et sur le stator respectivement, et les portions, en regard, de la surface (18) comprise entre deux palettes (14) du stator, et du rotor respectivement, est d'autant plus grande que la rotation relative entre lesdits rotor et stator, dans le sens de l'amortissement, est plus grande.

11. Amortisseur selon la revendication 1 dans quel lesdits stator et rotor sont coaxiaux, caractérisé en ce qu'au moins une partie de chaque portion de ladite surface (18) est cylindrique et excentrée par rapport à l'axe commun (3) auxdits rotor (2) et stator (1).

12. Amortisseur selon la revendication 11, caractérisé en ce que les centres de courbure (C1, C2, C3 et C4) des sections desdites portions cylindriques de ladite surface (18) par un plan transversal auxdites portions de surface sont situés sur un cercle, dont le centre appartient à l'axe commun (3) auxdits rotor (2) et stator (1), en étant régulièrement espacés sur ce cercle.

13. Amortisseur selon la revendication 12, comportant quatre palettes agencées sur le stator et quatre palettes agencées sur le rotor, caractérisé en ce que lesdits centres de courbure (C1, C2, C3 et C4) sont disposés en quadrature.

14. Amortisseur selon la revendication 13, dans lequel le stator est disposé à l'intérieur du rotor et chaque passage de laminage est défini entre l'extrémité libre d'une palette agencée sur le stator et une portion cylindrique, en regard, de la surface comprise entre deux palettes du rotor, caractérisé en ce que le centre de courbure (C1, C2, C3, ou C4) de la section de chaque portion cylindrique par un plan transversal à ladite portion est situé sur la ligne joignant les extrémités des palettes (7) du stator (1) qui sont chacune adjacentes à la palette (7) du stator (1) dont l'extrémité libre (16) définit, avec ladite portion cylindrique, un passage de laminage (19).

15. Suspension pour véhicule comprenant au moins un élément rigide déformable (53) coopérant à ses deux extrémités avec des paliers (60) solidaires d'un châssis (50) de véhicule (51) et relié au voisinage de son milieu à un essieu supportant au moins une roue (58), caractérisée en ce qu'elle comporte un amortisseur tel que défini selon l'une des revendications précédentes.

16. Commande manuelle comprenant une poignée de commande (65) solidaire d'un arbre (62) et dont le déplacement angulaire est représentatif d'un signal de sortie pilotant un organe, caractérisée en ce qu'elle comporte un amortisseur tel que défini selon l'une des revendications précédentes, agencé sur ledit arbre.

**Patentansprüche**

1. Rotationsdämpfer, der einen Stator (1) und einen Rotor (2), die zwischen ihnen eine mit einem Fluid gefüllte Hauptkammer (6) begrenzen, mindestens annähernd radiale Flügel (7, 14), die an jedem, dem genannten Stator und Rotor, angeordnet sind, wobei die am Stator bzw. am Rotor angeordneten Flügel besagte Hauptkammer in eine Mehrzahl von Hohlräumen (15) unterteilen und die freien Enden (16) der am Rotor bzw. Stator angeordneten Flügel in Zusammenwirken mit gegenüberliegenden Abschnitten der Fläche, die zwischen zwei Flügeln des Stators bzw. des Rotors enthalten sind, Wälzdurchgänge (19) begrenzen, aufweist, wobei besagter Dämpfer weiters eine Hilfskammer (34, 35) in Kommunikation mit genannter Hauptkammer aufweist, dadurch gekennzeichnet, daß die genannte Hilfskammer (34, 35) durch mindestens einen Hohlraum gebildet ist, der zwischen einerseits einer Stirnfläche (4, 5) besagten Dämpfers und andererseits einer verformbaren elastischen Membran (32, 33) festgelegt ist, welche mit genannter Stirnfläche verbunden ist.

2. Dämpfer nach Anspruch 1, dadurch gekennzeichnet, daß die genannte Hilfskammer (34, 35) durch zwei Hohlräume gebildet ist, wobei jeder von ihnen zwischen einerseits der einen der besagten Stirnflächen (4, 5) des genannten Dämpfers und andererseits einer verformbaren elastischen Membran (32, 33) festgelegt ist, welche mit der korrespondierenden Stirnfläche verbunden ist.

3. Dämpfer nach Anspruch 1, dadurch gekennzeichnet, daß eine mit einer Membran (32, 33) verbundene Stirnfläche (4, 5) aus zwei jeweils mit dem genannten Stator (1) bzw. dem genannten Rotor (2) verbundenen Kränzen (25, 26, 27, 28) gebildet ist, wobei der genannte Kommunikationsdurchgang zwischen der Hauptkammer (6) und der Hilfskammer (34, 35) durch ein Spiel (36) das zwischen den genannten Kränzen untergebracht ist, gebildet ist.

4. Dämpfer nach einem der Ansprüche 1 bis 3, dadurch gekennzeichnet, daß die genannte Membran (32, 33) einer Hilfskammer (34, 35) eine ringförmige Gestalt aufweist.

5. Dämpfer nach einem der Ansprüche 1 bis 4, dadurch gekennzeichnet, daß die ringförmigen Peripherien, die innere (37) und die äußere (38), einer Membran (32, 33) von einem inneren Ring (40) und einem äußeren Ring (41) umgeben sind.

6. Dämpfer nach Anspruch 5, dadurch gekennzeichnet, daß die genannte Membran (32, 33) durch Vulkanisierung mit jeweils ihrem inneren Ring (40) und ihrem äußeren Ring (41) verbunden ist.

7. Dämpfer nach einem der Ansprüche 3 bis 6, dadurch gekennzeichnet, daß die genannte Membran (32, 33), welche von besagtem inneren und besagtem äußeren Ring umgeben ist, in einer korrespondierenden ringförmigen Hohlkehle (44, 45) untergebracht ist, welche durch die genannten Kränze begrenzt ist.

8. Dämpfer nach Anspruch 1, dadurch gekennzeichnet, daß der Flächeninhalt des Querschnittes eines jeden Walzdurchgangs (19) variierbar in Abhängigkeit von der relativen Rotation zwischen dem genannten Rotor (2) und dem genannten Stator (1) ist.

9. Dämpfer nach Anspruch 8, dadurch gekennzeichnet, daß der Abstand zwischen den freien Enden (16) der Flügel (7), welche jeweils am Rotor bzw. am Stator angeordnet sind, und den gegenüberliegenden Abschnitten der Fläche (18), welche zwischen zwei Flügeln (14) des Stators bzw. des Rotors enthalten ist, umso kleiner ist, je größer die relative Rotation zwischen besagtem Rotor und besagtem Stator im Sinn der Dämpfung ist.

10. Dämpfer nach Anspruch 8, dadurch gekennzeichnet, daß der Abstand zwischen den freien Enden (16) der Flügel (7), welche jeweils am Rotor bzw. am Stator angeordnet sind, und den gegenüberliegenden Abschnitten der Fläche (18), welche zwischen zwei Flügeln (14) des Stators bzw. des Rotors enthalten ist, umso größer ist, je größer die relative Rotation zwischen besagtem Rotor und Stator im Dämpfungssinn ist.

11. Dämpfer nach Anspruch 1, bei welchem besagter Stator und Rotor koaxial angeordnet sind, dadurch gekennzeichnet, daß mindestens ein Teil eines jeden Abschnittes der besagten Fläche (18) zylindrisch und exzentrisch in Bezug auf die gemeinsame Achse (3) des besagten Rotors (2) und Stators (1) ist.

12. Dämpfer nach Anspruch 11, dadurch gekennzeichnet, dass die Krümmungszentren (C1, C2, C3 und C4) der Schnitte besagter zylindrischer Abschnitte der besagten Fläche (18) durch eine Transversalebene zu besagten Oberflächenabschnitten in einem Kreis angeordnet sind, dessen Zentrum zu der dem besagten Rotor (2) und dem besagten Stator (1) gemeinsamen Achse (3) gehört, wobei sie in regelmäßigem Abstand auf diesem Kreis angeordnet sind.

13. Dämpfer nach Anspruch 12, der vier Flügel, welche am Stator angeordnet sind, und vier Flügel, welche am Rotor angeordnet sind, aufweist, dadurch gekennzeichnet, daß besagte Krümmungszentren (C1, C2, C3 und C4) um 90° versetzt angeordnet sind.

14. Dämpfer nach Anspruch 13, bei welchem der Stator im inneren des Rotors angeordnet ist und jeder Walzdurchgang zwischen dem freien Ende eines Flügels, welcher am Stator angeordnet ist, und einem gegenüberliegenden zylindrischen Abschnitt der Fläche, welche zwischen zwei Flügeln des Rotors enthalten ist, definiert ist, dadurch gekennzeichnet, daß das Krümmungszentrum (C1, C2, C3 und C4) des Schnitts eines jeden zylindrischen Abschnitts durch eine Transversalebene zu besagtem Abschnitt auf der Linie situiert ist, welche die Enden der Flügel (7) des Stators (1) verbindet, welche jeweils dem Flügel (7) des Stators (1) benachbart sind, dessen freies Ende (16) mit besagtem zylindrischen Abschnitt einen Walzdurchgang (19) begrenzt.

15. Fahrzeugaufhängung, welche mindestens ein verformbares steifes Element (53) aufweist, welches mit seinen zwei Enden mit den Lagern (60), welche mit einem Chassis (50) eines Fahrzeuges (51) fest verbunden sind und das in Nachbarschaft seiner Mitte mit einer Wagenachse, welche mindestens ein Rad (58) trägt, verbunden ist, dadurch gekennzeichnet, daß sie einen gemäß einem der vorhergehenden Ansprüche definierten Dämpfer aufweist.

16. Manuelle Steuerung, welche einen Steuerhebel (65) aufweist, welcher mit einer Welle (62) fest verbunden ist und dessen Winkelverschiebung repräsentativ für ein Ausgangssignal ist, welches ein Organ steuert, dadurch gekennzeichnet, daß sie einen gemäß einem der vorhergehenden Ansprüche definierten Dämpfer aufweist, welcher mit besagter Welle verbunden ist.

**Claims**

1. Rotary damper, of the type comprising a stator (1) and a rotor (2) defining beetween them a main chamber (6) filled with a fluid, at least substantially radial blades (7, 14) being disposed on each of said stator and rotor, said blades disposed on the stator, respectively on the rotor, dividing said main chamber into a plurality of volumes (15), and the free ends (16) of the blades disposed on the rotor, respectively on the stator, defining laminating passages (19) in cooperation with portions, in facing relationship, of the surface included between two blades of the stator, respectively of the rotor, said damper further comprising an auxiliary chamber (34, 35) which communicates with said main chamber, characterized in that said auxiliary chamber (34, 35) is formed by at least an enclosure defined between, on the one hand, an extreme face (4, 5) of said damper and, on the other hand, an elastically deformable diaphragm (32, 33) associated to said extreme face.

2. Damper as claimed in claim 1, characterized in that said auxiliary chamber (34, 35) is formed by two enclosures, each one of which is defined between, on the one hand, one of said extreme faces (4, 5) of said damper and, on the other hand, an elastically deformable diaphragm (32, 33) associated to the corresponding extreme face.

3. Damper as claimed in claim 1, characterized in that one extreme face (4, 5) associated to a diaphragm (32, 33) is constituted of two discs (25, 26, 27, 28) respectively associated to said rotor (1) and to said stator (2), said communication passage between the main chamber (6) and the auxiliary chamber (34, 35) being formed by a clearance (36) provided between said discs.

4. Damper as claimed in one of claims 1 to 3, characterized in that said diaphragm (32, 33) of one auxiliary chamber (34, 35) is annular-shaped.

5. Damper as claimed in one of claims 1 to 4, characterized in that the external (38) and internal (37) annular peripheries of a diaphragm (32, 33) are encircled by an internal ring (40) and an external ring (41).

6. Damper as claimed in claim 5, characterized in that said diaphrragm (32, 33) is secured by vulcanization to its resspective external (41) and internal (40) rings.

7. Damper as claimed in one of claims 3 to 6, characterized in that said diaphragm (32, 33) encircled by said external and internal rings is housed in a corresponding annular groove (44, 45) defined by said discs.

8. Damper as claimed in claim 1, characterized in that the cross-sectional area of each laminating passage (19) is variable as a function of the relative rotation between said rotor (2) and said stator (1).

9. Damper as claimed in claim 8, characterized in that the distance between the free ends (16) of the blades (7) disposed on the rotor, and on the stator respectively, and the portions, in facing relationship, of the surface (18) included between two blades (14) of the stator, and of the rotor respectively, is all the smaller that the relative rotation between said rotor and stator, in the damping direction, is greater.

10. Damper as claimed in claim 8, characterized in that the distance between the free ends (16) of the blades (7) disposed on the rotor, and on the stator respectively, and the portions, in facing relationship, of the surface (18) included between two blades (14) of the stator, and of the rotor respectively, is all the greater that the relative rotation between said rotor and stator, in the damping direction, is greater.

11. Damper as claimed in claim 1, in which said stator and rotor are co-axial, characterized in that at least part of each portion of said surface (18) is cylindrical and eccentric with respect to the common axis (3) of said rotor (2) and stator (1).

12. Damper as claimed in claim 11, characterized in that the centers of curvature (C1, C2, C3 and C4) of the sections of said cylindrical portions of said surface (18) by a plane transversal to said portions of surface are situated on a circle, of which the center belongs to the common axis (3) of said rotor (2) and stator (1), said centers being regularly spaces out on said circle.

13. Damper as claimed in claim 12, comprising four blades disposed on the stator and four blades disposed on the rotor, characterized in that said centers of curvature (C1, C2, C3 and C4) are disposed in quadrature.

14. Damper as claimed in claim 13, in which the stator is disposed inside the rotor and each laminating passage is defined between the free end of a blade situated on the stator and a cylindrical portion, in facing relationship, of the surface included between two plates of the rotor, characterized in that the center of curvature (C1, C2, C3 and C4) of the section of each cylindrical portion by a plane transversal to said portion is situated on the line joining the ends of the blades (7) of the stator (1) each of which are adjacent to the blade (7) of the stator (1) of which the free end (16) defines, with said cylindrical portion, a laminating passage (19).

15. Vehicle suspension comprising at least one deformable rigid element (53) cooperating at its two ends with bearings (60) fast with a vehicle chassis (50) and coupled, towards its middle part, to an axle carrying at least one wheel (58), characterized in that said suspension comprises a damper as claimed in the preceding claims.

16. Hand-operated control comprising a control handle (65) fast with a shaft (62) and of which the angular displacement is representative of an output signal piloting a member, characterized in that said control comprises a damper as claimed in the preceding claims, and which is mounted on said shaft.

FIG.1

FIG.2

FIG.3

FIG.4

FIG.5

FIG.6

Fig. 7

Fig. 8

Fig. 9